# EUROPÄISCHE PATENTSCHRIFT

(11) **EP 2 542 467 B1**
(45) Veröffentlichungstag und Bekanntmachung des Hinweises auf die Patenterteilung: **07.10.2015**
(21) Anmeldenummer: 11710400.0
(22) Anmeldetag: 02.03.2011
(51) Int. Cl.: B63B 7/06, B63B 35/44, F24J 2/14, F24J 2/52

(54) **SCHWIMMENDE PLATTFORM**
FLOATING PLATFORM
PLATE-FORME FLOTTANTE

(30) Priorität: 05.03.2010 AT 3562010
(43) Veröffentlichungstag der Anmeldung: 09.01.2013
(73) Patentinhaber: Heliovis AG, 2351 Wiener Neudorf (AT)
(72) Erfinder: HÖFLER, Johannes, CH - 4127 Birsfelden (CH)
(74) Vertreter: Sonn & Partner Patentanwälte
(86) Internationale Anmeldenummer: PCT/AT2011/000100
(87) Internationale Veröffentlichungsnummer: WO 2011/106810

(56) Entgegenhaltungen:
- EP-A1- 1 925 548
- WO-A1-96/34793
- WO-A2-2009/001225
- DE-A1- 10 156 184
- DE-A1-102006 019 753
- FR-A1- 2 471 564

## Beschreibung

Die vorliegende Erfindung betrifft eine schwimmende Plattform mit einem flächigen Deckelement und einem mit dem Deckelement verbundenen Abdichtelement, das im Betrieb in dichtendem Kontakt mit einer Flüssigkeitsoberfläche steht und gemeinsam mit dem Deckelement und der Flüssigkeitsoberfläche bzw. einer Bodenfläche einen geschlossenen Hohlraum einschließt, in dem mit einer Drucklufterzeugungsvorrichtung ein die Plattform tragender Überdruck herstellbar ist, wobei ein flächiges Abdichtelement vorgesehen ist, wobei als flächiges Abdichtelement zumindest eine den Hohlraum begrenzende umlaufende Wand vorgesehen ist, die einen im Betrieb in die Flüssigkeit ragenden Dichtabschnitt aufweist.

Eine solche Plattform ist aus der EP 1 925 548 A1 bekannt.

Aus der WO 2009/001225 A2 ist eine schwimmende Plattform mit einer großflächigen Deckschicht bekannt, auf der Sonnenkollektoren angeordnet sind. Die Plattform weist einen ringförmigen Schwimmkörper auf, mit dem die Plattform auf einem Gewässer oder einem künstlich angelegten Becken getragen wird. Die Deckschicht ist an der Oberseite des ringförmigen Schwimmkörpers befestigt und schließt mit dem Schwimmkörper ein Volumen zum Untergrund luftdicht ab. Um die Deckschicht in einem bestimmten Abstand über der Wasseroberfläche bzw. der Bodenfläche zu halten, wird in dem eingeschlossenen Volumen mit Hilfe eines Kompressors ein Luftkissen erzeugt. Je nach Einsatzregion muss der Schwimmkörper sehr robust ausgeführt sein, um bei einer Verwendung der Plattform in einem natürlichen Gewässer den wechselhaften Bewegungen der Wasseroberfläche, insbesondere dem Seegang standhalten zu können. Dabei tritt insbesondere das Problem auf, dass sich der Seegang störend auf die Stabilität bzw. die Orientierung der Plattform auswirken kann, die grundsätzlich ortsstabil angeordnet und selektiv dem Sonnenstand nachgeführt werden soll. Der voluminöse ringförmige Schwimmkörper weist nachteiligerweise insbesondere an seiner Unterseite eine sehr große Angriffsfläche für Wellenbewegungen auf, welche die Stabilität der Anordnung beeinträchtigen können.

In der FR 2 471 564 A1 ist ein Sonnenkollektor mit mehreren getrennten, langgestreckten Kammern beschrieben, die zu einer runden Form zusammengesetzt sind. Die Kammern schießen mit einem Dach des Aufbaus einen geschlossenen Raum ein, welcher mit Druckluft befüllt ist, um das Eigengewicht des Kollektors zu tragen. Die seitlich angeordneten Kammern sind an der Unterseite mit einem torusförmigen Tragkörper verbunden, der in einem ringförmigen Kanal aufschwimmt. An der Unterseite des Tragkörpers ist ein ringförmiger Ballast aufgehängt. Der torusförmige Tragkörper weist jedoch die im Zusammenhang mit der WO 2009/001225 A2 erläuterten Nachteile insbesondere hinsichtlich einer mangelenden Stabilität gegenübere Wellenbewegungen auf.

Aus der US 2009/223508 A1 ist eine künstlichen Insel bekannt, welche zur Abstützung einen torusförmigen Tragkörper aufweist. Nachteiligerweise wird somit auch bei diesem Stand der Technik ein torusförmiger Tragkörper vorgesehen, welcher insbesondere an seiner Unterseite eine sehr große Angriffsfläche für Wellenbewegungen bietet.

Aus der US 4,350,143 A ist eine andersartige Solarenergieanlage bekannt, welche als schwimmende Plattform ausgebildet ist. Zur Erzeugung der erforderlichen Auftriebskraft sind Schwimmkörper vorgesehen, die als luftgefüllte Leitungen ausgebildet sind.

In der JP 59-089 471 A ist eine andersartige schwimmende Rahmenstruktur für eine Solaranlage gezeigt, welche eine Vielzahl von Seilen aufweist, die schachbrettartig zwischen dem Rahmen gespannt sind und mit Schwimmkörpern verbunden sind, an denen Generatorelemente angebracht sind.

Aus der DE 101 56 184 A1 ist zudem eine andersartige schwimmfähige Solarzellenanlage mit Sonnenstandsausrichtung bekannt.

Demgegenüber besteht die Aufgabe der Erfindung darin, eine kostengünstig herzustellende und konstruktiv einfache schwimmende Plattform der eingangs angeführten Art zu schaffen, die eine hohe Stabilität gegenüber wechselnden Umwelteinflüssen wie starkem Wind und Wellenbewegungen aufweist.

Dies wird durch eine schwimmenden Plattform mit den Merkmalen von Anspruch 1 erzielt.

Demnach ist erfindungsgemäß ein wandförmiges Abdichtelement vorgesehen, mit welchem der eingeschlossene Hohlraum seitlich nach außen begrenzt wird. Im Betrieb ist das Deckelement in einer bestimmten Höhe oberhalb der Flüssigkeitsoberfläche angeordnet, wobei das Deckelement durch den mit einem Gas unter Überdruck befüllten Hohlraum unterhalb des Deckelements getragen wird. Der Dichtabschnitt der umlaufenden Wand taucht dabei in die Flüssigkeit, üblicherweise Wasser oder höher siedende Fluide, ein und stellt so einen dichtenden Kontakt mit der Flüssigkeit her, so dass ein Gasaustritt aus dem eingeschlossenen Hohlraum im Normalbetrieb verhindert wird. Indem die Wand dichtend mit der Flüssigkeitsoberfläche abschließt, kann der Gasdruck im geschlossenen Hohlraum mit geringem Energieaufwand zum Betreiben der Drucklufterzeugungsvorrichtung aufrechterhalten werden. Als Drucklufterzeugungsvorrichtung der Plattform kann beispielsweise eine Pumpe bzw. ein Kompressor vorgesehen sein, mit der Druckluft über eine Einlassleitung in den Hohlraum unter dem Deckelement eingeleitet wird. Das wandförmige, flächige Abdichtelement weist vorteilhafterweise lediglich eine sehr geringe Querschnittsfläche auf, so dass der störende Einfluss von Wellen auf Stabilität bzw. Orientierung der Plattform beträchtlich vermindert wird. Die umlaufende Wand kann mit geringem Materialaufwand in nahezu beliebiger Größe kostengünstig hergestellt werden. Die erfindungsgemäße Plattform kann für unterschiedliche Einsatzgebiete herangezogen werden. Eine besonders bevorzugte Ausführung der Plattform sieht ein schwimmendes Solarkraftwerk vor, wobei an dem Deckelement vorzugsweise ein oder mehrere Sonnenkollektoren in Verbindung mit einem Wechselrichter, einer Dampfturbine oder dergleichen zur Umwandlung der einfallenden Sonnenstrahlung insbesondere in elektrische Energie vorgesehen sind. Die schwimmende Plattform kann aber beispielsweise auch als Landeplattform für Luftfahrzeuge, insbesondere Hubschraubern und Flugzeugen, verwendet werden. Hinsichtlich einer besonders effizienten Entkopplung des großflächigen Deckelements von den insbesondere seitlich im Bereich des Abdichtelements angreifenden Wind- bzw. Wellenkräften ist als umlaufende Wand eine insbesondere ringförmige flexible Membran vorgesehen ist. Die flexible Membran kann den Wellenbewegungen nachgeben, so dass nur sehr geringe Kräfte auf die Plattform selbst, d.h. insbesondere das Deckelement, übertragen werden. Diese Ausführung ist insbesondere dann von Vorteil, wenn die Plattform ungeschützt hohem Seegang ausgesetzt ist, beispielsweise bei einem Betrieb der Plattform auf offener See. Dabei nützt die flexible Membran das vom Seetang bekannte Prinzip, welches darauf beruht, der Wellenrollbewegung flexibel nachzugeben, ohne dass die angreifenden Kräfte aufgenommen und auf die Plattform übertragen werden. Entsprechend der Rollbewegung der umgebenden Fluidpartikel bleibt jede Stelle der Membran im zeitlichen Mittel an ihrer ursprünglichen Position. Vorteilhafterweise werden zufällige Abdrift-Bewegungen durch ausreichend große Rückstellkräfte der flexiblen Membran kompensiert. Um das Einreißen der Membran bei Erreichen ihrer Streckgrenze zu verhindern, kann die Membran mit einem eingearbeiteten bzw. auflaminierten Gewirke verbunden sein, das eine weitere Dehnung verhindert und über die maximale Dehnbarkeit der Membran hinausgehende Kräfte aufnimmt. Um den auftreffenden Wellen möglichst geringen Widerstand zu bieten, weist der Dichtabschnitt des Abdichtelements eine Mehrzahl von jeweils mit einem Ballastelement beschwerten Bereichen auf, die jeweils durch einen von dem Ballastelement freien Bereich des Dichtabschnitts des Abdichtelements getrennt sind.

Zur stabilen Abstützung der Plattform auf der Flüssigkeitsoberfläche ist es günstig, wenn das Abdichtelement an den Rand einer Deckfläche des Deckelements anschließt. Demnach ist das Abdichtelement vom Rand der im Wesentlichen horizontal angeordneten Deckfläche des Deckelements zur Flüssigkeitsoberfläche hin abgewinkelt. Das beispielsweise ringförmige Abdichtelement ist vorzugsweise im Wesentlichen senkrecht zur Flüssigkeitsoberfläche angeordnet.

Um einen ungewollten Gasdurchtritt vom geschlossenen Hohlraum in die Umgebung zuverlässig zu vermeiden, ist es von Vorteil, wenn das Abdichtelement einstückig mit zumindest dem Rand der Deckfläche des Deckelements gebildet ist. Durch die einstückige Ausbildung des Abdichtelements mit dem Randbereich der Deckfläche des Deckelements wird ein Lecken an den Verbindungsstellen zwischen dem Abdichtelement und dem Deckelement im Dauerbetrieb weitestgehend verhindert.

Bei einer bevorzugten Ausführung der Plattform ist vorgesehen, dass der geschlossene Hohlraum durch zumindest ein weiteres Abdichtelement in zumindest zwei Teilräume unterteilt ist. Indem zumindest zwei unabhängig voneinander mit Druckluft versorgte Teilräume vorgesehen sind, kann die Stabilität der Plattform auch im Falle eines Druckverlusts in einem der Teilräume sichergestellt werden. Zudem ist es günstig, wenn eine Steuerung der Drucklufterzeugungsvorrichtung dazu eingerichtet ist, in den Teilräumen jeweils einen unterschiedlichen Druck einzustellen. Wenn die Teilräume asymmetrisch angeordnet sind, kann die Plattform bei Bedarf durch unterschiedliche Druckbeaufschlagung der Teilräume gekippt werden, d.h. um eine horizontale, in der Haupterstreckungsebene des Deckelements verlaufende Achse verschwenkt werden. Beispielsweise kann die Plattform gekippt werden, um Regenwasser, das sich auf dem Deckelement gesammelt hat, an die Umgebung abzuleiten und so die Stabilität der Plattform, insbesondere die gewünschte Höhe des Deckelements über der Flüssigkeitsoberfläche, zu gewährleisten.

Zur Unterteilung des geschlossenen Hohlraums ist es insbesondere zweckmäßig, wenn die Teilräume einen äußeren und einen inneren Kreisring bilden, die vorzugsweise konzentrisch angeordnet sind. Bei einem Druckverlust im äußeren bzw. im inneren Kreisring wird das großflächige Deckelement immer noch durch das vom jeweils anderen Kreisring begrenzte Luftkissen getragen. Selbstverständlich können je nach Einsatzgebiet und Größe des Deckelements auch drei oder mehr insbesondere konzentrisch angeordnete Kreisringe vorgesehen sein. Die Ausfallssicherheit kann vorteilhafterweise weiter erhöht werden, wenn der äußere Ring in eine Mehrzahl von Segmenten unterteilt ist.

Um die Auswirkungen von einem Gasleck auf die Stabilität der Plattform möglichst gering zu halten, ist es von Vorteil, wenn der geschlossene Hohlraum durch eine Mehrzahl von im Wesentlichen wabenförmig oder schachbrettartig angeordneten Abdichtelementen unterteilt ist.

Zur zuverlässigen Abdichtung des gasbefüllten Hohlraums gegenüber der Umgebung ist es von Vorteil, wenn der Dichtabschnitt des Abdichtelements mit zumindest einem Ballastelement, insbesondere aus Metall oder Beton, beschwert ist. Mit dem Ballastelement wird der in die Flüssigkeit ragende Dichtabschnitt des Abdichtelements gespannt. Auf diese Weise ist die zur Aufrechterhaltung des dichtenden Kontakts erforderliche Eintauchtiefe des Abdichtelements in die Flüssigkeit auch unter schwierigen Bedingungen stets gewährleistet. Das Ballastelement ist vorzugsweise aus Metall oder Beton hergestellt. Andererseits können im Hinblick auf eine besonders kosteneffiziente Herstellung auch industrielle Reststoffe, wie Abraum, Schlacke oder allenfalls verglaste Asche, vorgesehen sein. Zudem sind auch Kombinationen der genannten Materialien denkbar, wie z.B. Betonzuschlagsstoffe- bzw. Metall-/Betonbehälter. Dabei kann Sand in entsprechend geformte Körper abgefüllt werden. Zur Ausbildung bzw. Unterstützung des Ballastelements kann das wandförmige Abdichtelement aus einem Material mit einem spezifischen Gewicht hergestellt sein, das höher ist als das spezifische Gewicht der umgebenden Flüssigkeit, beispielsweise PVC oder Fluorpolymere in Wasser. Um das zumindest teilweise aus einem Material mit vergleichsweise hohem spezifischen Gewicht hergestellte Abdichtelement weiter zu beschweren, kann einer der vorstehend genannten schweren Füllstoffe, wie Sand oder Metall, in das Abdichtelement integriert sein.

Zur Erzielung einer beweglichen Anordnung der mit dem Ballastelement beschwerten Bereiche der insbesondere membranförmigen Wand zueinander ist es günstig, wenn der Dichtabschnitt des Abdichtelements in dem vom Ballastelement freien Bereich gefaltet oder gewellt ist. Die beschwerten Bereiche der membranförmigen Wand sind gegeneinander verschiebbar, wodurch verhindert wird, dass insbesondere bei schräg anlaufenden Wellen Spannungen im Abdichtelement ausgebildet werden, die auf die Plattform übertragen werden.

Im Hinblick auf eine konstruktiv einfache Ausführung ist es von Vorteil, wenn als Ballastelement eine mit einem Ballastmaterial, insbesondere Sand oder Beton, gefüllte Kammer der Membran vorgesehen ist, die vorzugsweise an einem freien Endbereich des Dichtabschnitts ausgebildet ist. Demnach ist das Ballastmaterial vorzugsweise in die Membran integriert. Wenn die gefüllte Kammer der Membran an dem in die Flüssigkeit eingetauchten freien Endbereich des Dichtabschnitts vorgesehen ist, kann eine optimale Verspannung des Abdichtelements über seine gesamte Längserstreckung erzielt werden. Bei einer weiteren bevorzugten Ausführungsform sind die Ballastelemente von dem Abdichtelement getrennt, wobei die Verbindung jedes Ballastelements mit dem Abdichtelement über ein geeignetes Befestigungsmittel, beispielsweise ein Seil oder dergleichen, erfolgt.

Zur Unterstützung des Abdichtelements ist es von Vorteil, wenn der Dichtabschnitt des Abdichtelements ein insbesondere durch eine weitere Kammer der flexiblen Membran gebildetes Auftriebselement aufweist. Die in die Membran integrierte weitere Kammer kann mit Luft oder mit einem Auftriebsgas, beispielsweise einem Edelgas, gefüllt sein. Vorzugsweise weist das Auftriebselement eine Mehrzahl von Unterbrechungen bzw. Unterteilungen auf, wobei es insbesondere zweckmäßig ist, wenn das Auftriebselement jeweils oberhalb eines mit einem Ballastelement beschwerten Bereichs des Dichtabschnitts des Abdichtelements verläuft und an den von dem Ballastelement freien Bereichen unterbrochen ist. Demnach kann das Abdichtelement vollständig oder zumindest teilweise durch das Auftriebselement getragen werden, um den druckbeaufschlagten Hohlraum unterhalb des Deckelements zu entlasten. Zur Ausbildung des Auftriebselements kann es bei einer alternativen Ausführung günstig sein, wenn der obere Bereich des Dichtabschnitts des Abdichtelements aus einem Material hergestellt ist, das ein geringeres spezifisches Gewicht als jenes der umgebenden Flüssigkeit aufweist, wie beispielsweise Polypropylen in Wasser. Auf diese Weise kann ein gesondertes Auftriebselement unterstützt bzw. ersetzt werden.

Zur stabilen Positionierung der Plattform auf der Flüssigkeitsoberfläche ist es günstig, wenn das Deckelement bzw. das Abdichtelement mit zumindest einem im Betrieb zumindest teilweise in die Flüssigkeit eingetauchten Schwimm- bzw. Auftriebskörper verbunden ist. Zur Erzeugung einer Auftriebskraft kann der Schwimmkörper einen oder mehrere mit Luft bzw. mit einem anderen Gas gefüllte Hohlräume aufweisen. Der Schwimm- bzw. Auftriebskörper kann einerseits in der Art einer herkömmlichen Boje im Bereich der Flüssigkeitsoberfläche vorgesehen sein. In vielen Fällen ist es jedoch günstig, wenn der Schwimm- bzw. Auftriebskörper mehrheitlich, insbesondere auch vollständig in die Flüssigkeit eingetaucht ist. Wenn der Schwimm- bzw. Auftriebskörper im Betrieb in tieferen Wasserschichten angeordnet wird, kann die gegenüber der Flüssigkeitsoberfläche verringerte Wellenenergie zur Stabilisierung der Plattform genützt werden. Die Schwimm- bzw. Auftriebskörper sind vorzugsweise so dimensioniert, dass sie das Deckelement zumindest temporär tragen können, wenn die Druckversorgung des Gaskissens unter dem Deckelement unterbrochen ist.

Hinsichtlich einer Stabilisierung bzw. Abstützung der Plattform ist es insbesondere von Vorteil, wenn als Schwimm- bzw. Auftriebskörper eine langgestreckte, insbesondere rohrförmige, Boje vorgesehen ist. Die langgestreckte Boje wird im Betrieb im Wesentlichen senkrecht zur Flüssigkeitsoberfläche angeordnet, wobei die langgestreckte Boje mit ihrem einen Ende die Wasseroberfläche durchstößt. Der vergleichsweise geringe Querschnitt der rohrförmigen Boje in der Art einer sogenannten Holm-Boje bzw. "spar buoy" setzt den anlaufenden Wellen nur sehr geringen Widerstand entgegen, so dass die seitlich auf die Boje einwirkenden Kräfte vergleichsweise gering sind. Die langgestreckten bzw. rohrförmigen Bojen bieten den Wellen aufgrund ihres geringen Querschnitts wenig Angriffsfläche. Zudem ermöglicht ein der langgestreckten Form der Boje entsprechendes Trägheitsmoment der Boje bzw. ein gegebenenfalls vorhandener tief liegender Ballast eine besonders positionsstabile Anordnung der langgestreckten Boje in tiefer eingetauchten Abschnitten auch im Fall, dass ihr oberer Abschnitt hohen seitlichen Kräften ausgesetzt ist. Auf diese Weise kann eine sehr stabile Anordnung der Plattform im Betrieb erzielt werden, was insbesondere bei einer Verwendung der Plattform als schwimmendes Solarkraftwerk hinsichtlich der erzielbaren Energieausbeute oder aus Sicherheitsgründen bei einer Verwendung als Landeplattform für Luftfahrzeuge von erheblicher Bedeutung ist.

Zur Stabilisierung der Plattform ist es günstig, wenn das Deckelement bzw. das Abdichtelement mit zumindest einem im Betrieb zumindest teilweise in die Flüssigkeit eingetauchten Stabilisierungskörper in der Art eines Treibankers verbunden ist. Der Stabilisierungskörper kann vorzugsweise eine im Betrieb im Wesentlichen parallel zur Flüssigkeitsoberfläche ausgerichteten Fläche aufweisen, die zur Stabilisierung der Plattform vertikalen Wellenbewegungen einen großen Widerstand entgegensetzt. Wenn der Stabilisierungskörper in verschiedene Richtungen abstehende vertikale Flächen aufweist, kann zudem den seitlich auf die Plattform einwirkenden Kräften (z.B. Windböen) ein Widerstand entgegengesetzt werden. Vorzugsweise werden solche in alle Raumrichtungen wirkenden Stabilisierungskörper eingesetzt.

An der Unterseite des Dichtabschnitts des Abdichtelements kann eine separate bzw. eine in die insbesondere membranförmige Wand integrierte Tauchboje vorgesehen sein, die vorzugsweise mit einem oder mehreren Stabilisierungskörpern verbunden ist oder deren Funktionalität übernimmt, um die Unterkante des Dichtabschnitts des Abdichtelements unabhängig von den eingeleiteten Wellenkräften stabil in den unbewegten Tiefen der Flüssigkeit zu positionieren.

Die Tauchboje kann über Verseilungen und druckbelastbare Strukturen, wie Stangen, Rohre und Fachwerke oder dergleichen mit dem Deckelement verbunden sein, um die Relativposition zum Deckelement bzw. die gewünschte Höhe des Deckelements über der Flüssigkeitsoberfläche stabil einzuhalten. Zudem ermöglichen diese Verbindungen, dass das Deckelement zumindest temporär getragen werden kann, wenn die Druckversorgung des Gaskissens unter dem Deckelement unterbrochen ist. Dazu können beispielsweise auch zusätzliche Auftriebskissen in der Art von Airbags vorgesehen sein, die sich im Notfall aufblasen, um den zusätzlich benötigten Auftrieb zu erzeugen.

Der Druckunterschied zwischen dem Hohlraum und der Umgebung bewirkt eine in radialer Richtung wirkende Kraft auf das Deckelement, die danach strebt, das Deckelement kugelförmig nach außen zu wölben, da dies die energetisch günstigste Form darstellt. Eine solche Durchbiegung des Deckelements infolge des Druckunterschieds soll jedoch möglichst vermieden werden. Neben der Eigensteifheit des Deckelements können zu diesem Zweck verschiedene Effekte in abgestimmter Art und Weise herangezogen werden. Der Innendruck im Hohlraum bewirkt nur dann eine das Deckelement verformende Kraft, wenn der Druck zu hoch oder zu niedrig wird. Solange das Deckelement im Wesentlichen waagrecht angeordnet ist und das Flächengewicht des Deckelements genau dem Druckunterschied entspricht, verschwinden die radial nach innen wirkenden Kräfte. Der Druck im Hohlraum kann jedoch vielfach nur mit begrenzter Genauigkeit eingestellt werden. Das umlaufende Abdichtelement bietet dem Innendruck Angriffsflächen, um eine radial nach außen wirkende Kraft zu erzeugen, die aber aufgrund der Proportionen zwischen dem Durchmesser und der Höhe der Plattform in manchen Fällen nicht ausreichend sein können. Vorteilhafte zusätzliche Maßnahmen zur Stabilisierung der Anordnung sind (i) Bojen, die von unten mit dem Deckelement verbunden sind und durch ihr Eigengewicht einer Beabstandung des Deckelements von der Flüssigkeitsoberfläche entgegenwirken, (ii) Verstärkungsstrukturen, die am Abdichtelement bzw. an Bojen angreifen und die Plattform beispielsweise ringförmig oder nach Art eines Drahtspeichenrads versteifen, und (iii) die Beaufschlagung einzelner Teilräume des Hohlraums mit unterschiedlichen Drücken derart, dass die erzeugten Spannungen radial nach außen wirken, beispielsweise durch einen erhöhten Druck zwischen einem äußeren und einem etwas weiter innen liegenden konzentrischen ringförmigen Abdichtelement nach Art eines Luftreifens. Dem lokal höheren Druck kann in diesem Fall ein ebenso lokal höheres Flächengewicht entgegengesetzt werden.

Zur gleichmäßigen Verteilung von seitlich an der Plattform angreifenden oder radial wirkenden Kräften, wie sie insbesondere bei einer Verschwenkung der Plattform um eine vertikale Achse bzw. infolge von Meeresströmungen, Windkräften oder der Verlegung der Plattform an neue Einsatzorte auftreten, ist es günstig, wenn an der Unterkante des Abdichtelements ein insbesondere ringförmiges Verstärkungselement, wie ein Seil, eine Stange, ein Rohr, ein Fachwerk oder dergleichen, vorgesehen ist. An dem Verstärkungselement können auch etwaige Ballastkörper, Tauchbojen und Treibanker befestigt werden, die teilweise oder vollständig durch das Verstärkungselement gebildet sein können. Besonders vorteilhaft ist es weiters, wenn weitere Abdichtelemente, die den Hohlraum in Teilräume unterteilen, jeweils über ein solches Verstärkungselement verfügen.

Zudem ist es von Vorteil, wenn im Fall eines in Teilräume unterteilten Hohlraums das weitere Abdichtelement bzw. vorhandene Schwimm- bzw. Stabilisierungskörper kraftschlüssig mit dem ringförmig umlaufenden Verstärkungselement verbunden sind, um vertikale und horizonale Kräfte gleichmäßig auf die gesamte Plattform zu verteilen.

Hinsichtlich einer gleichmäßigen Stabilisierung der Plattform ist es von Vorteil, wenn eine Mehrzahl von Schwimmkörpern bzw. Stabilisierungskörpern ringförmig am Abdichtelement befestigt bzw. im Wesentlichen symmetrisch bezüglich einer vertikalen Symmetrieachse des Deckelements angeordnet sind.

Die Befestigung der Schwimm- bzw. Stabilisierungskörper an der Plattform erfolgt vorzugsweise über ein druckbelastbares Verbindungsteil, insbesondere ein Rohr, eine Stange, ein Fachwerk, oder dergleichen. Zudem ist es vielfach günstig, wenn die Schwimm- bzw. Stabilisierungskörper mittels eines absenkbaren Ankerelements in der Art einer sogenannten "Tension Leg Platform" zum Gewässerboden hin zugbelastet verspannt werden können.

Um die einwirkenden Kräfte gleichmäßig auf die Schwimm- bzw. Stabilisierungskörper aufzuteilen, ist es günstig, wenn zumindest zwei Schwimm- bzw. Stabilisierungskörper über Verbindungselemente, insbesondere Rohre, Stangen, Seile, oder Fachwerke, miteinander verbunden sind. Durch die Verbindung der Schwimm- bzw. Stabilisierungskörper untereinander können punktuelle Belastungsspitzen vermieden werden. Zusätzlich können ein oder mehrere dieser Schwimm- und Stabilisierungskörper mit dem Verstärkungselement des Abdichtelements kraftschlüssig verbunden sein.

Um die Ausrichtung bzw. Orientierung der Plattform bei Bedarf verändern zu können, ist es günstig, wenn das Deckelement insbesondere über eine einstellbare Auftriebskraft des Schwimmkörpers bzw. einer Kammer der Membran höhenverstellbar bzw. um eine in der Haupterstreckungsebene der Hülle verlaufende Drehachse drehbar gelagert ist. Demnach kann die Plattform gekippt werden, wodurch einerseits ermöglicht wird, Regenwasser von der Deckfläche des Deckelements in die Flüssigkeit abrinnen zu lassen. Bei einer Ausführung der Plattform als Solarkraftwerk kann durch die Verschwenkung des Deckelements um eine horizontale Achse eine einachsige Nachführung in Abhängigkeit vom zeitveränderlichen Sonnenstand erzielt werden. Die Verschwenkung der Plattform wird vorzugsweise durch lokale Variation der auf die Plattform wirkenden Auftriebskraft bewerkstelligt. Dies kann zum einen dadurch erfolgen, dass vorzugsweise durch eine Steuereichrichtung gesteuert zusätzliche Auftriebskörper an einer Seite der Plattform in die Flüssigkeit vorgeschoben werden bzw. die Auftriebskraft von vorhandenen Auftriebskörpern erhöht wird, beispielsweise indem ein im Inneren des Auftriebskörpers eingeschlossener Hohlraum durch Einleiten von zusätzlichem Gas vergrößert wird. Zur Verschwenkung der Plattform kann andererseits der in einer hohlen Kammer der umlaufenden Membran herrschende Gasdruck einseitig erhöht bzw. erniedrigt werden. Durch Erhöhen bzw. Erniedrigen der auf die Plattform insgesamt wirkenden Auftriebskraft kann zudem der Abstand zwischen dem Deckelement und der Flüssigkeitsoberfläche bzw. der Bodenfläche eingestellt werden. Beispielsweise kann bei besonders rauem Seegang das Deckelement weiter von der Wasseroberfläche beabstandet werden.

Zudem ist es insbesondere bei einem Einsatz der Plattform als Solaranlage von Vorteil, wenn die Plattform um eine im Wesentlichen senkrecht zur Haupterstreckungsebene des Deckelements bzw. zur Flüssigkeitsoberfläche angeordnete Achse drehbar ist. Ein solches Drehen der Plattform kann insbesondere zur Nachführung an den Sonnenstand genützt werden. Die Verdrehung wird vorzugsweise mit einer Antriebsvorrichtung, beispielsweise einem Motor in Verbindung mit einer Schiffsschraube, bewirkt, die unter der Flüssigkeitsoberfläche an dem Abdichtelement bzw. einem Schwimm- oder Stabilisierungskörper angreift. Die Antriebsvorrichtung kann zudem derart ausgelegt sein, dass die Plattform selbstständig ihren Einsatzort erreichen kann; andererseits kann die Plattform mit einer gesonderten Zugmaschine an ihr Ziel geschleppt werden. Dabei werden insbesondere jahreszeitlich oder meteorologisch begünstigte Gebiete aufgesucht, um insbesondere bei einem Einsatz der Plattform als Solarkraftwerk einen hocheffizienten Betrieb zu ermöglichen. Insbesondere ist es auch denkbar, dass die als Solarkraftwerk betriebene Plattform unmittelbar an einen industriellen Verbraucher (z.B. eine Aluminiumhütte) angeschlossen wird, wodurch hohe Jahreserträge erzielt werden können.

Um seitlich an der Plattform angreifende Windkräfte in ortsfeste Fixpunkte ableiten zu können, ist es von Vorteil, wenn das Deckelement bzw. das Abdichtelement über ein zugbelastbares Element mit einem Schlitten verbunden ist, der in einem an der Bodenfläche angeordneten Schienenelement verschieblich gelagert ist. Die schräg zu den Fixpunkten gespannten zugbelastbaren Elemente wie insbesondere Seile, Ketten oder dergleichen greifen an dem beweglichen Schlitten an, der in dem an der Bodenfläche montierten Schienenelement geführt ist. Für das Schienenelement und den Schlitten können beispielsweise Rollen, Schleifkontakte, Magnet- oder Luftkissen verwendet werden.

Alternativ kann das Schienenelement an der Deckfläche bzw. an dem Abdichtelement der Plattform befestigt sein, wobei seitlich auftreffende Kräfte über die zugbelastbaren Elemente in die als Fixpunkte fungierenden Schwimm- bzw. Stabilisierungskörper abgeleitet werden.

Die vorstehend beschriebene Plattform kann einerseits für einen Einsatz in einem natürlichen Gewässer, beispielsweise auf dem Meer, ausgelegt werden.

Im Hinblick auf eine Ausführung der Plattform als landbasierte Anlage ist es günstig, wenn die Flüssigkeit, in die das Abdichtelement eintaucht, ein künstlich angelegtes Fluidvolumen an Land, insbesondere zumindest ein kreis- bzw. ringförmiges Becken, ist.

Besonders vorteilhaft für Becken an Land ist die Verwendung einer niederviskosen Flüssigkeit, die im Klima des Einsatzorts nicht verdunstet, möglichst keine Verbindungen mit Schmutzteilchen eingeht und resistent gegen biologische, chemische und physikalische Zersetzung ist. Beispiele dafür sind spezielle ionische Flüssigkeiten und synthetische Öle, insbesondere Silikonöle.

Die Erfindung wird nachstehend anhand von in der Zeichnung dargestellten bevorzugten Ausführungsbeispielen, auf die sie jedoch nicht beschränkt sein soll, noch weiter erweitert. Im Einzelnen zeigen in der Zeichnung:
Fig. 1a einen Längsschnitt einer schwimmenden Plattform gemäß einer Ausführungsform der Erfindung;
Fig. 1b eine teilweise aufgebrochene perspektivische Ansicht einer schwimmenden Plattform ähnlich Fig. 1a;
Fig. 2 eine schematische Ansicht einer weiteren Ausführungsform der erfindungsgemäßen Plattform;
Fig. 3a eine perspektivische Gesamtansicht einer schwimmenden Plattform gemäß einer weiteren Ausführungsform der Erfindung;
Fig. 3b eine teilweise aufgebrochene perspektivische Ansicht der schwimmenden Plattform gemäß Fig. 3a;
Fig. 3c eine weitere teilweise aufgebrochene perspektivische Ansicht der in Fig. 3a und Fig. 3b dargestellten Plattform;
Fig. 3d eine vergrößerte Darstellung eines Ausschnitts der schwimmenden Plattform gemäß den Fig. 3a bis 3c;
Fig. 4a bis 4c jeweils schematisch einen Querschnitt einer schwimmenden Plattform gemäß weiteren Ausführungen der Erfindung;
Fig. 4d einen Längsschnitt einer schwimmenden Plattform gemäß einer weiteren Ausführung der Erfindung;
Fig. 5a schematisch eine Ansicht einer Plattform in einem künstlich angelegten Becken; und
Fig. 5b eine vergrößerte Darstellung des in Fig. 5a mit einem Kreis gekennzeichneten Ausschnitts.

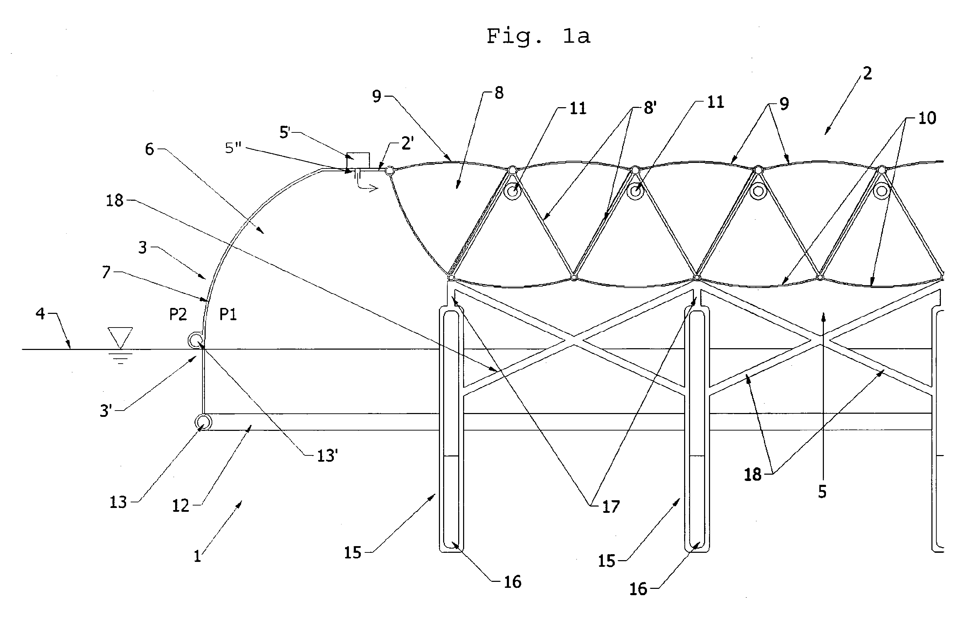

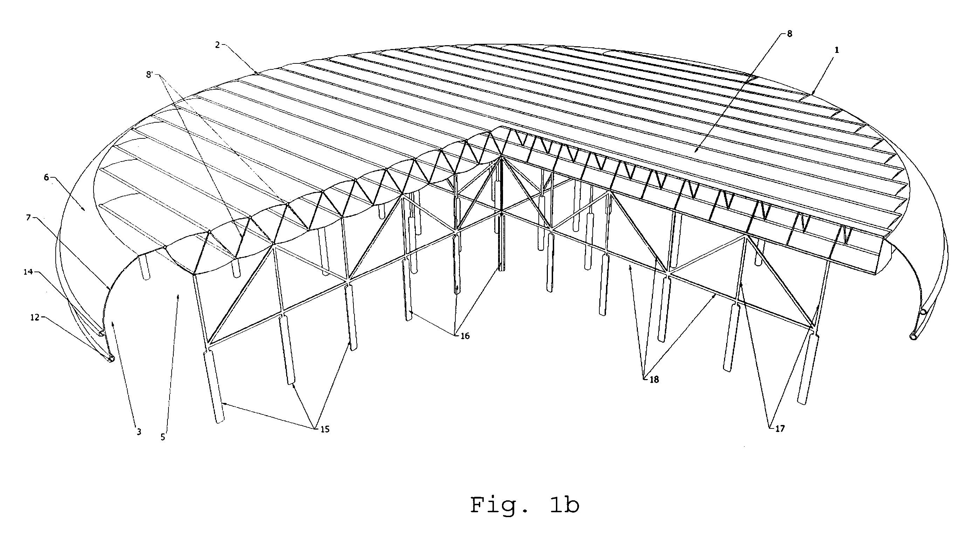

Fig. 1a und Fig. 1b zeigt jeweils eine schwimmende Plattform 1 mit einem großflächigen Deckelement 2, das eine von der Flüssigkeit abgewandte Deckfläche 2' aufweist, an dem ein umlaufendes Abdichtelement 3 befestigt ist. Das Abdichtelement 3 weist einen Dichtabschnitt 3' auf, der mit einer in Fig. 1a durch eine Niveaulinie veranschaulichten Flüssigkeitsoberfläche 4 dichtend abschließt. Das Deckelement 2 begrenzt gemeinsam mit dem umlaufenden Abdichtelement 3 einen geschlossenen Hohlraum 5 zur Flüssigkeitsoberfläche 4. Der Hohlraum 5 ist über eine in Fig. 1a schematisch eingezeichnete Gasleitung 5' mit einer Drucklufterzeugungsvorrichtung 5'' verbunden, mit der ein das Deckelement 2 abstützender Überdruck im Hohlraum 5 herstellbar ist. Die Druckdifferenz zwischen einem Druck P1 im Hohlraum 5 und einem Umgebungsdruck P2 wird so eingestellt, dass die schwimmende Plattform 1 durch den Luftpolster getragen wird, der unter dem Deckelement 2 den Hohlraum 5 bis zur Flüssigkeitsoberfläche 4 ausfüllt. Die erforderliche Druckdifferenz P1 - P2 hängt vom zu tragenden Flächengewicht der Plattform und damit von den Lasten ab, die diese aufnehmen soll. Das Gewicht pro Fläche in m² bzw. mBar Druckdifferenz P1 - P2 beträgt beispielsweise 10 kg/ (m² · mBar). Selbstverständlich kann anstelle von Luft im engeren Sinn ein anderes gasförmiges Medium, insbesondere Auftriebsgase, wie ein Edelgas, verwendet werden.

Das Abdichtelement 3 hat die Aufgabe, ein seitliches Entweichen der Luft vom Hohlraum 5 in die Umgebung zu vermeiden. Zu diesem Zweck steht der Dichtabschnitt 3' des Abdichtelements 3 in dichtenden Kontakt mit der Flüssigkeitsoberfläche 4. Bisher wurden bei solchen Plattformen 1 als Abdichtelemente 3 voluminöse, insbesondere ring- bzw. schlauchförmige Schwimmkörper vorgesehen, die insbesondere bei einem Betrieb der Plattform 1 auf offener See anfällig gegenüber Störungen durch Wellenbewegungen waren. Zur Erzielung einer materialsparenden und kostengünstig herstellbaren Plattform 1 ist das Abdichtelement 3 erfindungsgemäß als umlaufende Wand 6 ausgebildet. Demnach ist ein flächiges Abdichtelement 3 vorgesehen, dessen vergleichsweise geringe Querschnittsfläche insbesondere vertikalen Wellenbewegungen nur sehr geringen Widerstand entgegensetzt. Vorteilhafterweise kann so eine weitestgehende Entkopplung des Deckelements 2 von dem Gewässer ermöglicht werden.

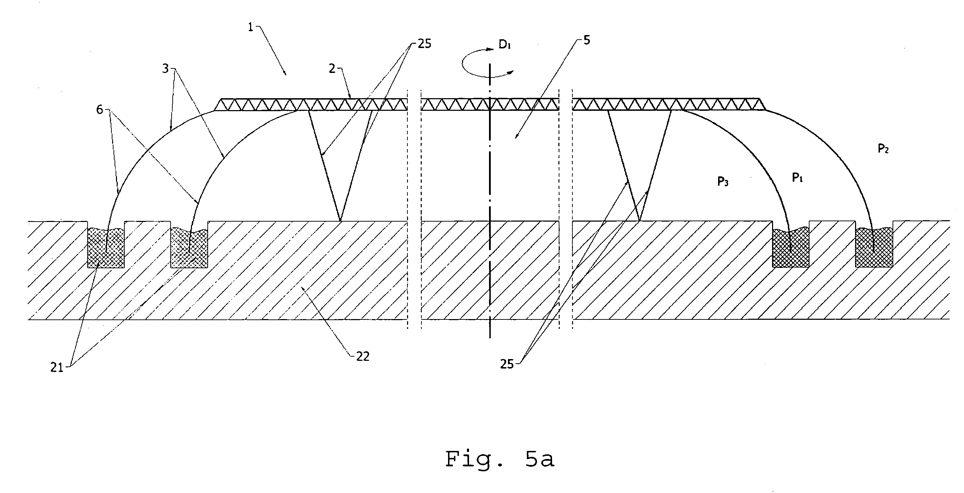

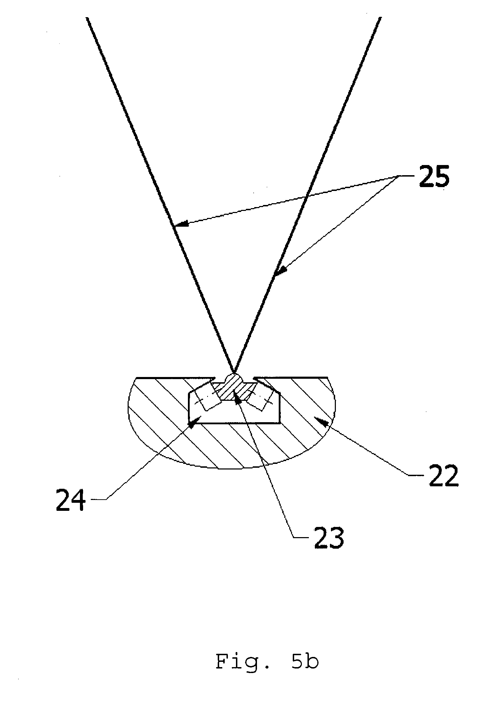

Bei der in Fig. 1a dargestellten Ausführungsform der Plattform 1 ist das wandförmige Abdichtelement 3 durch eine in sich geschlossene Membran 7 gebildet, die einwirkenden Wellen- bzw. Windkräften flexibel nachgeben kann. Die Membran 7 ist einstückig mit dem Rand der Deckfläche 2' des Deckelements 2 gebildet. Abweichend von der Erfindung kann bei einem Einsatz der Plattform 1 in einem künstlichen Becken an Land, wie im Zusammenhang mit Fig. 5 weiter beschrieben, die Wand 6 auch als starrer Wandteil, beispielsweise aus Blech oder dergleichen, ausgebildet sein.

Die dargestellte Plattform 1 kann für unterschiedlichste Zwecke verwendet werden, wobei beispielhaft ein Hubschrauberlandeplatz oder eine Ölplattform genannt werden soll. Bei einer besonders bevorzugten Ausführung ist die Plattform 1 als schwimmendes Solarkraftwerk ausgelegt. Zu diesem Zweck weist das Deckelement 2 einen kissenförmigen Konzentrator 8 auf, bei dem die Sonnenstrahlung durch eine zumindest abschnittsweise transparente Membran 9 durchtritt, anschließend an einer Reflektormembran 10 reflektiert und in einem Absorber 11 gebündelt wird. Zur Erzielung von gekrümmten Abschnitten der Reflektormembran sind im inneren des Konzentrators 8 Spannelemente 8', beispielsweise Seile, Stangen, oder membranartige Trennwände, angeordnet bzw. gespannt. Das Deckelement 2 kann zudem eine Reihe von weiteren für den Betrieb als Solarkraftwerk erforderliche Komponenten wie Wechselrichter oder Dampfturbinen aufweisen, die zwecks einer besseren Übersichtlichkeit in der Zeichnung nicht dargestellt sind.

Um das Entweichen von Gas aus dem Hohlraum 5 zuverlässig zu vermeiden, ist es notwendig, dass der Dichtabschnitt 3' des wandförmigen Abdichtelements 3 stets ausreichend tief unter die Flüssigkeitsoberfläche 4 ragt. Wellenbewegungen können jedoch dazu führen, dass der Dichtabschnitt 3' über die Flüssigkeitsoberfläche 4 herausgehoben wird. Um die Membran 7 im Betrieb zu spannen und so sicher unter der Flüssigkeitsoberfläche 4 zu halten, ist im Bereich einer in die Flüssigkeit eingetauchten Unterkante der Membran 7 ein Ballastelement 12 vorgesehen, das die Membran 7 beschwert. Gemäß dem Ausführungsbeispiel von Fig. 1a und 1b ist als Ballastelement 12 eine umlaufende Kammer 13 vorgesehen, die in die Membran 7 integriert ist. Die Kammer 13 ist mit einem geeigneten Ballastmaterial gefüllt, wozu beispielsweise Sand, Beton oder ein Metall zählen. Um das Gewicht des Ballastelements 12 teilweise oder vollständig zu kompensieren und so die gesamte Struktur zu entlasten, kann ein Auftriebselement 14 vorgesehen sein, das durch eine weitere Kammer 13' der Membran 7 gebildet sein kann. Wie aus Fig. 1a ersichtlich, schwimmt die umlaufende Kammer 13' auf der Flüssigkeitsoberfläche 4. Bei einer konstruktiv einfachen Ausführung ist die Kammer 13' durch eine luftbefüllte Hohlkammer gegeben. Bei einer starren Ausführung des Abdichtelements 3 kann auf ein solches Ballastelement 12 verzichtet werden.

Die Wand als Deckelement 2 wird durch den mit Gas befüllten Hohlraum 5 in einem bestimmten Abstand über der Flüssigkeitsoberfläche 4 gehalten, der zweckmäßigerweise zwischen ein und zwanzig maximal anzunehmenden Wellenamplituden am gewünschten Standort beträgt. Um gezielt Auftriebskräfte an die Plattform 1 anzulegen bzw. um die Plattform zu stabilisieren, sind an der Unterseite des Deckelements 2 eine Vielzahl von Schwimm- bzw. Auftriebskörpern 15 befestigt. Bei den Ausführungsbeispielen gemäß Fig. 1a bzw. Fig. 1b sind als Schwimm- bzw. Auftriebskörper 15 langgestreckte, rohrförmige Bojen 16 vorgesehen, die im Betrieb im Wesentlichen senkrecht in der Flüssigkeit stehen. An ihren oberseitigen Enden ragen die rohrförmigen Bojen 16 durch die Flüssigkeitsoberfläche 4. Die kleinen Querschnittsflächen der rohrförmigen Bojen 16 bieten den einlaufenden Wellen nur einen sehr geringen Widerstand, so dass auch bei starkem Seegang lediglich geringe Kräfte auf die Plattform 1 übertragen werden. Zur Befestigung der Schwimm- bzw. Auftriebskörper 15 an der Plattform 1 sind druckbelastbare Verbindungsteile 17 vorgesehen, die bei der gezeigten Ausführung stangenförmig ausgebildet sind. Zur gleichmäßigen Verteilung der einwirkenden Kräfte sind die Schwimm- bzw. Auftriebskörper 15 untereinander über Verbindungselemente 18 verbunden. Bei der gezeigten Ausführung greifen stangenförmige Verbindungselemente 18 über Kreuz bzw. fachwerkartig an den Schwimmkörpern 15 bzw. den Verbindungsteilen 17 an.

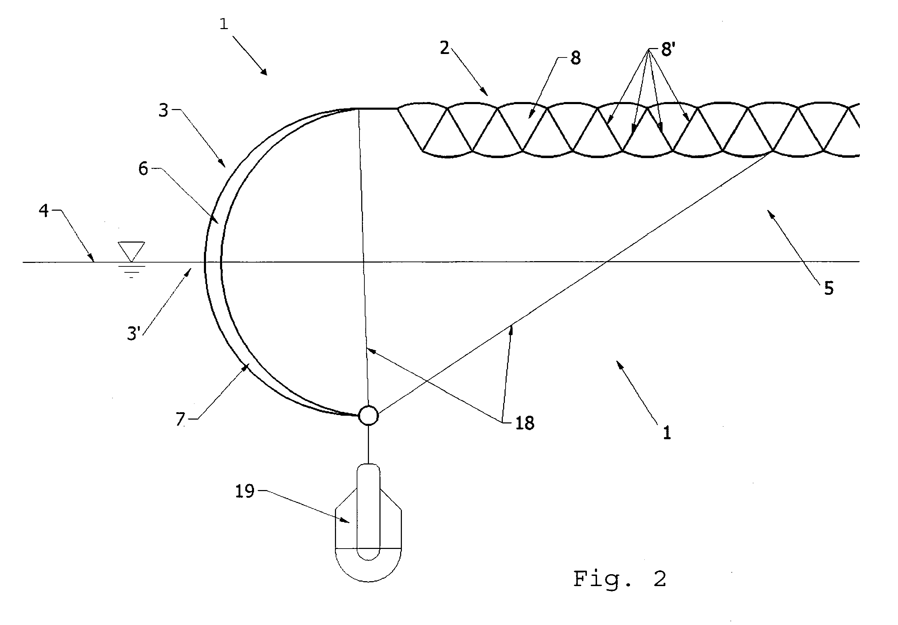

Fig. 2 zeigt schematisch eine modifizierte Ausführung der Plattform 1, wobei die Unterkante des wandförmigen Abdichtelements 3 über ein Verbindungselement 18, beispielsweise ein Seil oder dergleichen, mit dem seitlichen Randbereich der Deckfläche 2' des Deckelements 2 verbunden ist. An der Unterkante des wandförmigen Abdichtteils 3 greift zudem ein weiteres Verbindungselement 18 an, dessen anderes Ende weiter innen am Deckelement 2 befestigt ist. Durch die Verseilung bzw. Verspannung des wandförmigen Abdichtelements 3 ergibt sich eine gekrümmte Form des Abdichtelements 3, mit der ein zum flexiblen Nachgeben der Wellenbewegung geeigneter Materialüberschuss erzielt wird. An der Unterkante des Abdichtelements 3 ist zudem eine Tauchboje mit integriertem Stabilisierungskörper 19 befestigt, mit dem die seilförmigen Verbindungselemente 18 bzw. das Abdichtelement 3 gespannt werden. Bei einer starren Ausführung der Verbindungselemente 18 kann anstelle des Stabilisierungskörpers 19 auch ein Auftriebskörper 15 vorgesehen sein, mit dem eine Auftriebskraft auf das Abdichtelement 3 aufgebracht wird.

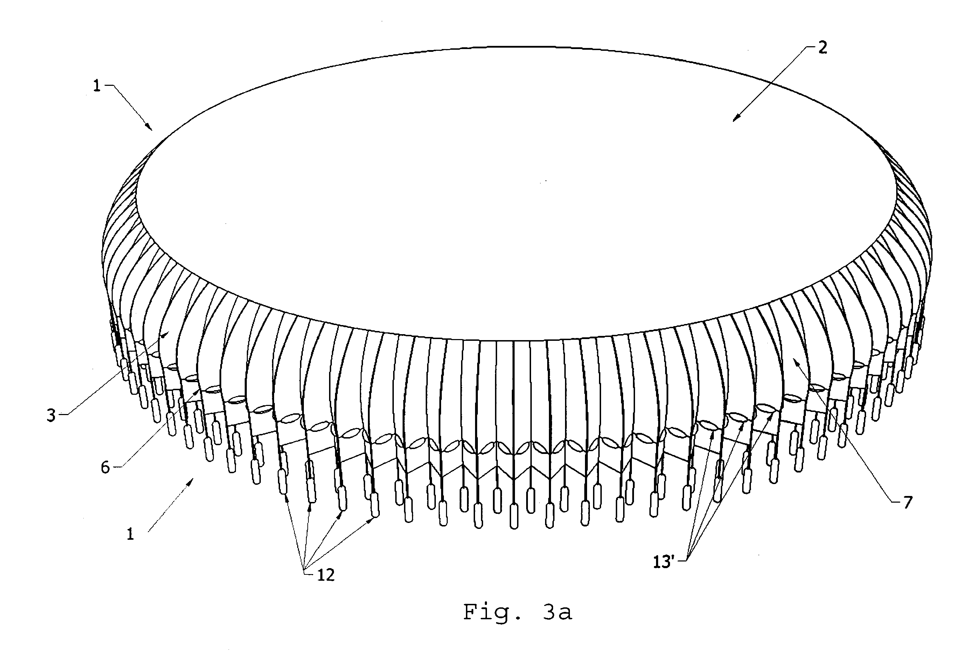

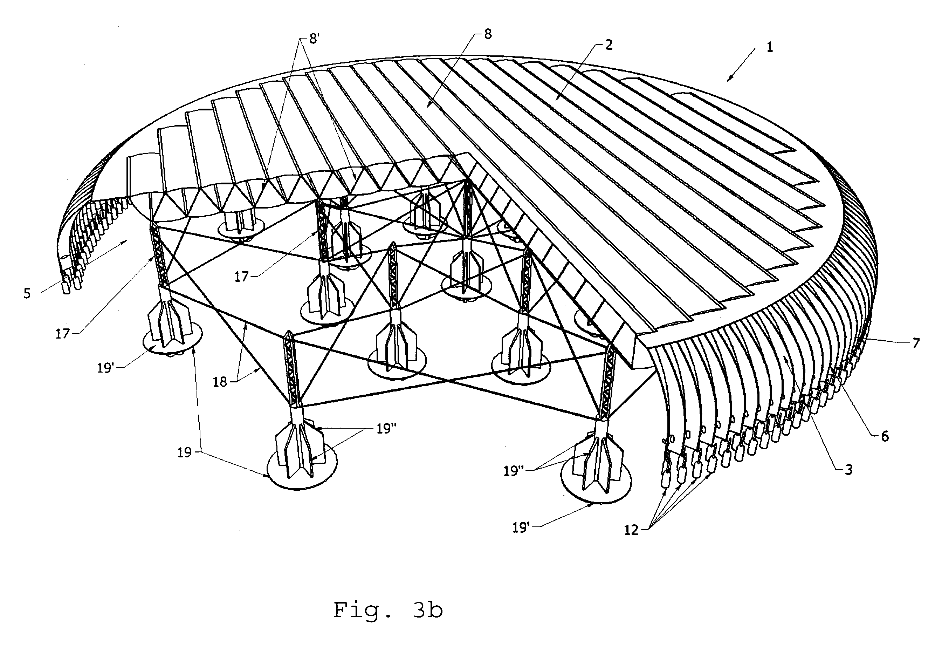

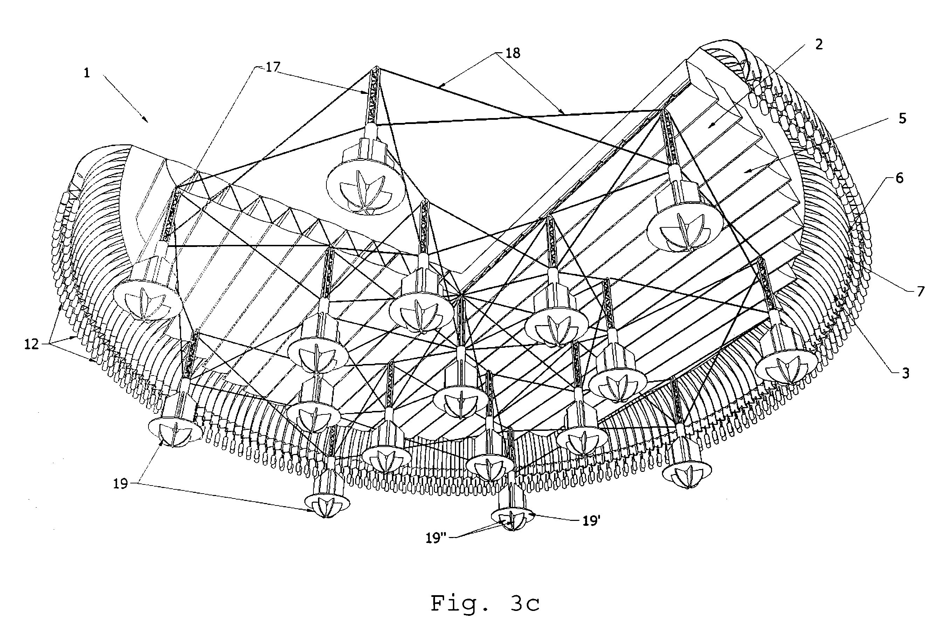

Die Fig. 3a bis 3d zeigen jeweils eine weitere Ausführungsform der Plattform 1, bei der eine Reihe von Schwimm- bzw. Stabilisierungskörpern 15, 19 an der Unterseite des Deckelements 2 befestigt sind. Die in der Art von Treibankern bzw. Tauchbojen ausgeführten Stabilisierungskörper 19 weisen jeweils einen im Betrieb im Wesentlichen horizontal ausgerichteten Abschnitt 19' auf, der einem vertikalen Wellenhub großen Widerstand entgegensetzt und so stabilisierend auf die Höhe des Deckelements 2 über der Flüssigkeitsoberfläche 4 wirkt. Der Stabilisierungskörper 19 weist oberhalb bzw. unterhalb des horizontalen Abschnitts 19' im Wesentlichen sternförmig von einer Mittelachse abstehende vertikale Abschnitte 19" auf, die parallel zur Haupterstreckungsebene der Plattform 1 wirkenden Kräften entgegenwirken. Zur Verbindung mit dem Deckelement 2 weist der Stabilisierungskörper 19 jeweils ein starres Verbindungsteil 17 auf, das unmittelbar an die Unterseite des Deckelements 2 anschließt. Das Verbindungsteil 17 ist in der Art eines Fachwerks ausgeführt, wobei Längsträger durch eine Vielzahl von abgewinkelten Querträgern miteinander verbunden sind. Diese Anordnung hält großen Drücken stand, wobei die angreifenden Wellenkräfte nur zu einem geringen Anteil auf die Plattform 1 übertragen werden.

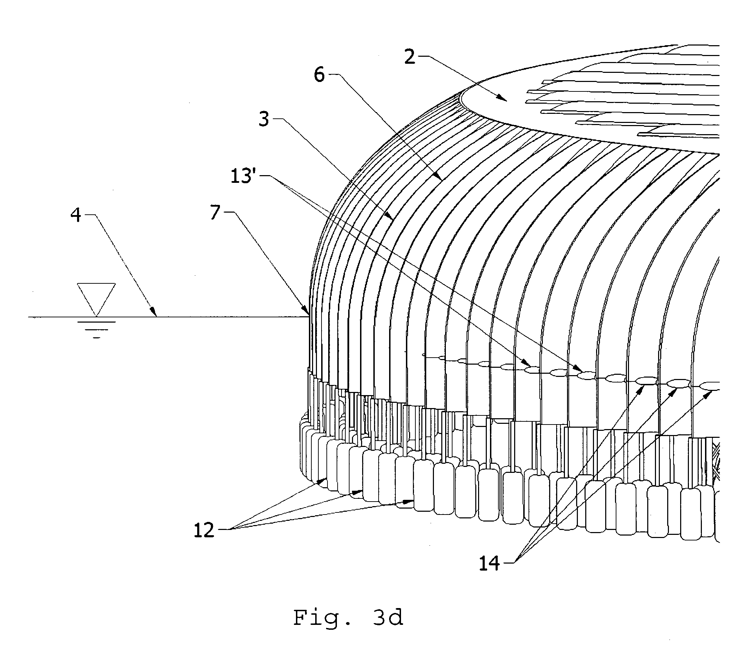

Wie insbesondere aus der vergrößerten Darstellung gemäß Fig. 3d ersichtlich, weist der Dichtabschnitt 3' des durch eine Membran 7 gebildeten Abdichtelements 3 in regelmäßigen Abständen angeordnete Bereiche auf, die jeweils mit einem Ballastelement 12 beschwert sind. Die langgestrecken, im Betrieb im Wesentlichen vertikal angeordneten Ballastelemente 12 sind über ein seil- bzw. stabförmiges Verbindungsteil 17 an der Unterkante des Dichtabschnitts 3' des Abdichtelements 3 befestigt. Demnach sind die Ballastelemente 12 im Unterschied zur anhand der Fig. 1a und 1b erläuterten Ausführung nicht in die Membran 7 integriert, sondern werden als gesonderte Teile an der Membran 7 befestigt. Der Dichtabschnitt 3' des Abdichtelements 3 ist gefaltet, wobei jeweils an der gemeinsamen Kante von zwei abgewinkelten Bereichen des Dichtabschnitts 3' ein Ballastelement 12 angreift. Auf diese Weise ergibt sich eine zweireihige Anordnung der Ballastelemente 12. Die gefaltete Anordnung des Abdichtelements 3 erlaubt im Betrieb eine Verschiebung der einzelnen Bereiche des Dichtabschnitts 3' gegeneinander, um so den eingeleiteten Wellenkräften flexibel nachgeben zu können. Bei einer alternativen (in den Figuren nicht dargestellten) Ausführungsform ist vorgesehen, dass der Dichtabschnitt 3' des Abdichtelements 3 wellenförmig verläuft.

Um den außerhalb der Flüssigkeit angeordneten Abschnitt des Abdichtelements 3 zu entlasten, ist an den von den Ballastelementen 12 freien Bereichen des Dichtabschnitts 3' jeweils ein Auftriebselement 14 vorgesehen, wobei jedes Auftriebselement 14 durch eine in die Membran 7 integrierte Kammer 13' gebildet ist. Die Auftriebselemente 14 schwimmen im Betrieb auf der Flüssigkeitsoberfläche 4.

Die Plattform 1 kann einen Durchmesser von ca. 10 Metern im Fall von wellenarmen Binnengewässern bis zu mehreren Kilometern aufweisen, so dass an den verschiedenen Stellen der Plattform 1 sehr unterschiedliche Kräfte einwirken können. Zur gleichmäßigen Verteilung der einwirkenden Kräfte sind die Stabilisierungskörper 19 über seil- bzw. stabförmige Verbindungselemente 18 miteinander verspannt. Zur mechanischen Stabilisierung der Plattform 1 hat es sich insbesondere als günstig herausgestellt, wenn an jedem Stabilisierungskörper 19 zumindest 2 Verbindungselemente 18 angreifen, die über Kreuz mit jeweils zumindest einem anderen Stabilisierungskörper 19 verbunden sind.

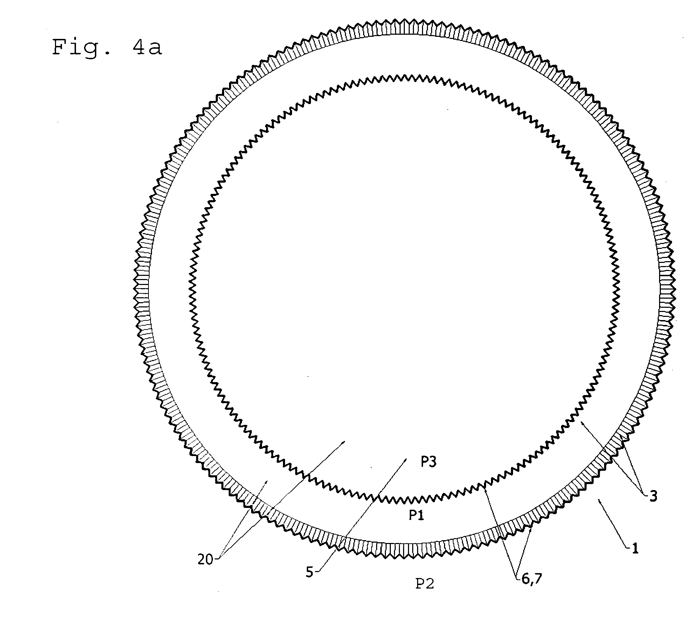

Die Fig. 4a bis 4c zeigen jeweils schematisch einen Querschnitt durch eine Plattform 1, bei welcher der geschlossene Hohlraum 5 unter dem Deckelement 2 durch zumindest ein weiteres wandförmiges Abdichtelement 3 in einzelne Teilräume 20 geteilt ist. Die Unterteilung des Hohlraums 5 stellt einerseits die Tragfähigkeit der Plattform 1 bei einem Druckverlust in einem der Teilräume 20 sicher. Zudem können mit der Drucklufterzeugungsvorrichtung 5' unterschiedliche Drücke P1, P3 in den Teilräumen eingestellt werden (vgl. auch Fig. 5). Dies ermöglicht bei einer geeigneten Anordnung der Teilräume 20 bezüglich der Mittelachse der Plattform 1, dass die Plattform 1 im Bedarfsfall gekippt, d.h. um eine in der Haupterstreckungsebene der Plattform 1 bzw. des Deckelements 2 verlaufende Achse verschwenkt werden kann. Ein Kippen der Plattform 1 kann beispielsweise dann zweckmäßig sein, wenn sich Regenwasser auf dem Deckelement 2 gesammelt hat, das in die umgebende Flüssigkeit abgeleitet werden soll.

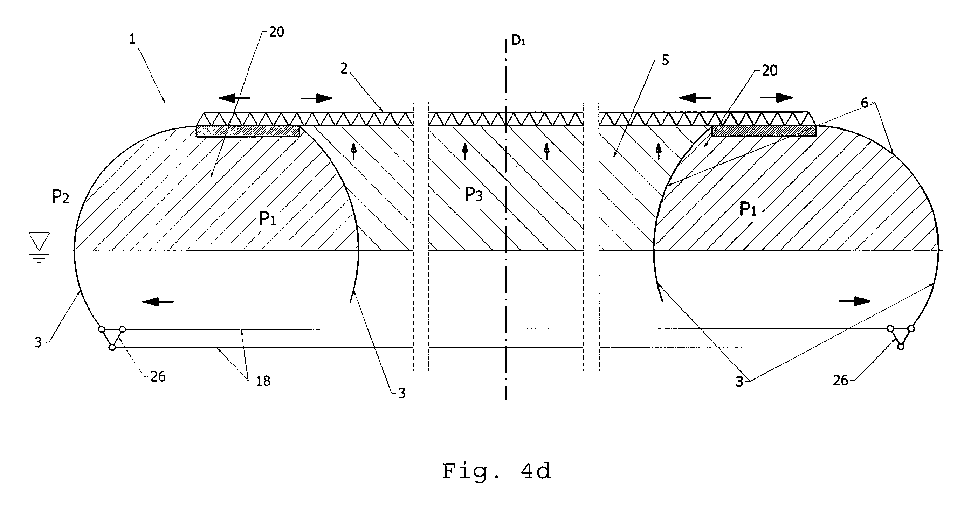

Zudem kann die Verschwenkbarkeit der Plattform 1 zur Nachführung der Plattform 1 an den Sonnenstand genützt werden, wenn die Plattform 1 als Solarkraftwerk ausgeführt ist. Die Nachführung der Plattform 1 dient dazu, stets für eine optimale Ausrichtung von auf der Plattform 1 angeordneten Sonnenkollektoren zur Sonne zu sorgen. Zusätzlich zum Kippen der Plattform 1 ist es zur gezielten Ausrichtung der Sonnenkollektoren am Sonnenstand günstig, wenn die Plattform 1 um ihre vertikale Achse (vgl. Achse D1 in Fig. 4d bzw. Fig. 5a) gedreht werden kann. Das Drehen der Plattform 1 um die im Betrieb senkrecht zur Flüssigkeitsoberfläche 4 verlaufende Achse D1 kann beispielsweise durch eine seitlich an der Plattform 1 angreifende Antriebsvorrichtung (in den Figuren nicht dargestellt) bewerkstelligt werden.

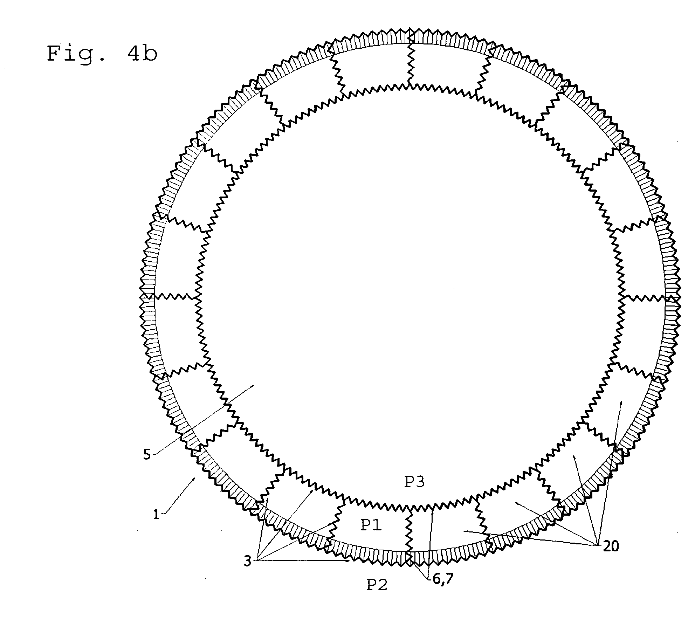

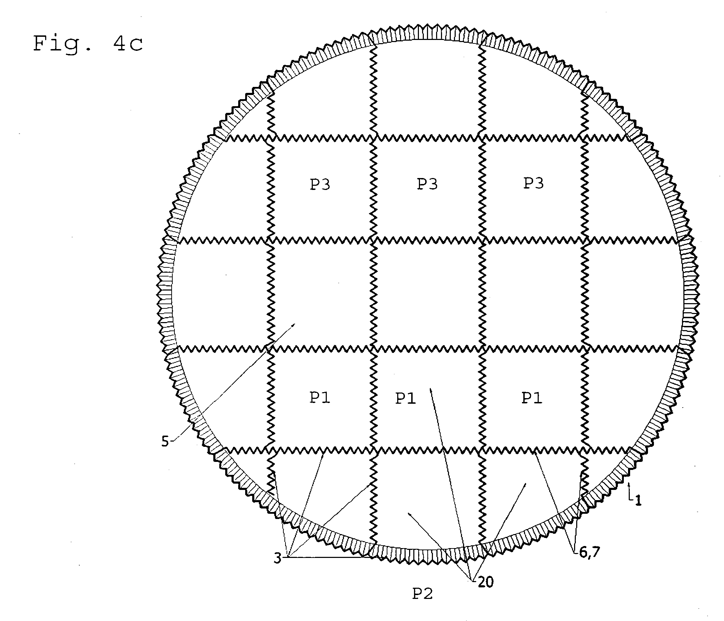

Gemäß Fig. 4a sind die Teilräume 20 als äußerer und innerer Kreisring ausgebildet, die konzentrisch um die Mittelachse der Plattform 1 angeordnet sind. Fig. 4b zeigt eine gegenüber Fig. 4a modifizierte Ausführung, bei welcher zwischen dem äußeren und dem inneren Kreisring weitere wandförmige Abdichtelemente 3 angeordnet sind, die im Wesentlichen senkrecht zum äußeren bzw. inneren Kreisring stehen. Bei der Ausführung gemäß Fig. 4c ist der Hohlraum 5 durch senkrecht zueinander verlaufende wandförmige Abdichtelemente 3 schachbrettartig unterteilt.

Aus Fig. 4d ist insbesondere ersichtlich, dass durch Anpassung der Drücke P3, P1 in den Teilräumen 20 des Hohlraums 5 eine unerwünschte Durchbiegung des Deckelements 2 verhindert werden kann, so dass im Betrieb eine weitestgehend horizontale Anordnung des Deckelements 2 erzielt wird. Die auftretenden Kräfte sind dabei mit Pfeilen veranschaulicht. In Fig. 4d ist zudem schematisch ein umlaufend an der Unterkante des Abdichtelements 3 angeordnetes fachwerkartiges Verstärkungselement 26 dargestellt, zwischen dem Verbindungselemente 18 angeordnet bzw. gespannt sind, die dem Druck P1 in dem äußeren Teilraum 20 entgegenwirken.

Die vorstehend beschriebene Plattform 1 kann insbesondere als schwimmendes Solarkraftwerk in einem natürlichen oder einem künstlich angelegten Gewässer eingesetzt werden. Fig. 5 zeigt beispielhaft künstlich angelegte Becken 21, in denen eine schwimmende Plattform 1 angeordnet ist, welche jedoch nicht der vorliegenden Erfindung entspricht.

Die Becken 21 sind in einer Bodenfläche 22 angeordnet. Der Hohlraum 5 unter dem Deckelement 2 ist durch ein weiteres Abdichtelement 3 in einen inneren und einen äußeren Teilraum 20 unterteilt, die unabhängig voneinander mit Druckluft versorgt werden (vgl. die Drücke P1, P2, P3 in Fig. 5a).

Wie insbesondere aus der Detailansicht gemäß Fig. 5b ersichtlich, sind zwischen dem Deckelement 2 und einem Schlitten 23, der in einem in die Bodenfläche 22 integrierten Schienenelement 24 verschieblich gelagert ist, zugbelastbare Elemente 25 angeordnet bzw. gespannt, mit denen insbesondere seitlich an der Plattform 1 angreifende Kräfte (z.B. Windböen) an die Bodenfläche 22 übertragen werden können.

## Patentansprüche

1. Schwimmende Plattform (1) mit einem flächigen Deckelement (2) und einem mit dem Deckelement (2) verbundenen Abdichtelement (3), das im Betrieb in dichtendem Kontakt mit einer Flüssigkeitsoberfläche (4) steht und gemeinsam mit dem Deckelement (2) und der Flüssigkeitsoberfläche (4) bzw. einer Bodenfläche einen geschlossenen Hohlraum (5) einschließt, in dem mit einer Drucklufterzeugungsvorrichtung (5') ein das Deckelement (2) tragender Überdruck herstellbar ist, wobei ein flächiges Abdichtelement (3) vorgesehen ist, wobei als flächiges Abdichtelement (3) zumindest eine den Hohlraum (5) begrenzende umlaufende Wand (6) vorgesehen ist, die einen im Betrieb in die Flüssigkeit ragenden Dichtabschnitt (3') aufweist, wobei als umlaufende Wand (6) eine flexible Membran (7) vorgesehen ist, **dadurch gekennzeichnet, dass** der Dichtabschnitt (3') des Abdichtelements (3) eine Mehrzahl von jeweils mit einem Ballastelement (12) beschwerten Bereichen aufweist, die jeweils durch einen von dem Ballastelement (12) freien Bereich des Dichtabschnitts (3') des Abdichtelements (3) getrennt sind.

2. Schwimmende Plattform nach Anspruch 1, **dadurch gekennzeichnet, dass** die Membran (7) ringförmig ist.

3. Schwimmende Plattform nach Anspruch 1 oder 2, **dadurch gekennzeichnet, dass** das Abdichtelement (3) an den Rand einer Deckfläche (2') des Deckelements (2) anschließt.

4. Schwimmende Plattform nach einem der Ansprüche 1 bis 3, **dadurch gekennzeichnet, dass** das Abdichtelement (3) einstückig mit zumindest dem Rand der Deckfläche (2') des Deckelements (2) gebildet ist.

5. Schwimmende Plattform nach einem der Ansprüche 1 bis 4, **dadurch gekennzeichnet, dass** der geschlossene Hohlraum (5) durch zumindest ein weiteres Abdichtelement (3) in zumindest zwei vorzugsweise zumindest einen äußeren und einen inneren Kreisring bildende Teilräume (20) unterteilt ist, wobei der geschlossene Hohlraum (5) vorzugsweise durch eine Mehrzahl von im Wesentlichen wabenförmig oder schachbrettartig angeordneten Abdichtelementen (3) unterteilt ist.

6. Schwimmende Plattform nach einem der Ansprüche 1 bis 5, **dadurch gekennzeichnet, dass** der Dichtabschnitt (3') des Abdichtelements (3) mit zumindest einem Ballastelement (12) aus Metall oder Beton beschwert ist.

7. Schwimmende Plattform nach Anspruch 6, **dadurch gekennzeichnet, dass** der Dichtabschnitt (3') des Abdichtelements (3) in dem vom Ballastelement (12) freien Bereich gefaltet oder gewellt ist.

8. Schwimmende Plattform nach Anspruch 7, **dadurch gekennzeichnet, dass** als Ballastelement (12) eine mit einem Ballastmaterial, insbesondere Sand oder Beton, gefüllte Kammer (13) der Membran (7) vorgesehen ist, die vorzugsweise an einem freien Endbereich des Dichtabschnitts (3') ausgebildet ist.

9. Schwimmende Plattform nach einem der Ansprüche 1 bis 8, **dadurch gekennzeichnet, dass** der Dichtabschnitt (3') des Abdichtelements (3) ein insbesondere durch eine weitere Kammer (13) der flexiblen Membran (7) gebildetes Auftriebselement (14) aufweist.

10. Schwimmende Plattform nach einem der Ansprüche 1 bis 9, **dadurch gekennzeichnet, dass** das Deckelement (2) bzw. das Abdichtelement (3) mit zumindest einem im Betrieb zumindest teilweise in die Flüssigkeit eingetauchten Schwimm- bzw. Auftriebskörper (15) verbunden ist, wobei als Schwimm- bzw. Auftriebskörper (15) vorzugsweise eine langgestreckte, insbesondere rohrförmige, Boje (16) vorgesehen ist.

11. Schwimmende Plattform nach einem der Ansprüche 1 bis 10, **dadurch gekennzeichnet, dass** das Deckelement (2), das Abdichtelement (3) bzw. der Auftriebskörper (15) mit zumindest einem im Betrieb zumindest teilweise in die Flüssigkeit eingetauchten Stabilisierungskörper (19) in der Art eines Treibankers verbunden ist.

12. Schwimmende Plattform nach einem der Ansprüche 10 oder 11, **dadurch gekennzeichnet, dass** eine Mehrzahl von Schwimmkörpern (15) bzw. Stabilisierungskörpern (19) ringförmig am Abdichtelement (3) befestigt bzw. im Wesentlichen symmetrisch bezüglich einer vertikalen Symmetrieachse des Deckelements (2) angeordnet sind.

13. Schwimmende Plattform nach einem der Ansprüche 10 bis 12, **dadurch gekennzeichnet, dass** zumindest zwei Schwimm- (15) bzw. Stabilisierungskörper (19) über Verbindungselemente (18), insbesondere Rohre, Stangen, Seile, oder Fachwerke, miteinander verbunden sind.

14. Schwimmende Plattform nach einem der Ansprüche 1 bis 13, **dadurch gekennzeichnet, dass** das Deckelement (2) insbesondere über eine einstellbare Auftriebskraft des Schwimmkörpers (15) bzw. einer Kammer (13') der Membran (7) höhenverstellbar bzw. um eine in der Haupterstreckungsebene des Deckelements verlaufende Drehachse drehbar gelagert ist.

15. Schwimmende Plattform nach einem der Ansprüche 1 bis 14, **dadurch gekennzeichnet, dass** das Deckelement (2) bzw. das Abdichtelement (3) über ein zugbelastbares Element mit einem Schlitten verbunden ist, der in einem an der Bodenfläche angeordneten Schienenelement verschieblich gelagert ist.

## Claims

1. A floating platform (1) having a flat cover element (2) and a sealing element (3) which is connected to the cover element (2), makes a sealing contact with a liquid surface (4) during operation and encloses a closed cavity (5) together with the cover element (2) and the liquid surface (4) or a bottom surface, in which cavity (5) an overpressure which supports the cover element (2) is producible by a compressed-air production apparatus (5'), wherein a flat sealing element (3) is provided, wherein at least one circumferential wall (6) confining the cavity (5) and comprising a sealing section (3') projecting into the liquid during operation is provided as the flat sealing element (3), wherein a flexible membrane (7) is provided as the circumferential wall (6), **characterized in that** the sealing section (3') of the sealing element (3) comprises a plurality of regions that are each weighted down with a ballast element (12) and that are each separated by a region of the sealing section (3') of the sealing element (3) which is free from the ballast element (12).

2. The floating platform according to claim 1, **characterized in that** the membrane (7) is ring-shaped.

3. The floating platform according to claims 1 or 2, **characterized in that** the sealing element (3) joins the edge of a cover surface (2') of the cover element (2).

4. The floating platform according to any of claims 1 to 3, **characterized in that** the sealing element (3) is formed integrally at least with the edge of the cover surface (2') of the cover element (2).

5. The floating platform according to any of claims 1 to 4, **characterized in that** the closed cavity (5) is divided into at least two partial chambers (20) by at least one further sealing element (3), said at least two partial chambers (20) preferably forming at least one outer and one inner circular ring, wherein the closed cavity (5) is preferably divided by a plurality of sealing elements (3) that are arranged substantially in the shape of a honeycomb or a checkerboard.

6. The floating platform according to any of claims 1 to 5, **characterized in that** the sealing section (3') of the sealing element (3) is weighted down by at least one ballast element (12) of metal or concrete.

7. The floating platform according to claim 6, **characterized in that** the sealing section (3') of the sealing element (3) is folded or undulated in the region free from the ballast element (12).

8. The floating platform according to claim 7, **characterized in that** a chamber (13) of the membrane (7) which is filled with a ballast material, in particular sand or concrete, is provided as the ballast element (12), said chamber (13) being formed preferably at a free end region of the sealing section (3').

9. The floating platform according to any of claims 1 to 8, **characterized in that** the sealing section (3') of the sealing element (3) comprises a buoyant element (14) formed in particular by a further chamber (13) of the flexible membrane (7).

10. The floating platform according to any of claims 1 to 9, **characterized in that** the cover element (2) and/or the sealing element (3) is connected with at least one floating and/or buoyant body (15) immersed at least partially into the liquid during operation, wherein preferably an elongate, in particular tubular, buoy (16) is provided as the floating and/or buoyant body (15).

11. The floating platform according to any of claims 1 to 10, **characterized in that** the cover element (2), the sealing element (3) and/or the buoyant body (15) are connected with at least one stabilization body (19) in the kind of a drift anchor which is at least partially immersed into the liquid during operation.

12. The floating platform according to any of claims 10 or 11, **characterized in that** a plurality of floating bodies (15) and/or stabilization bodies (19) are fastened annularly at the sealing element (3) and/or arranged substantially symmetrically with respect to a vertical symmetry axis of the cover element (2).

13. The floating platform according to any of claims 10 to 12, **characterized in that** at least two floating (15) and/or stabilization bodies (19) are connected with each other via connecting elements (18), in particular tubes, rods, ropes, or frameworks.

14. The floating platform according to any of claims 1 to 13, **characterized in that** the cover element (2) is, in particular via an adjustable buoyancy force of the floating body (15) and/or a chamber (13') of the membrane (7), adjustable in height and/or mounted to be rotated about an axis of rotation extending in the main extension plane of the cover element.

15. The floating platform according to any of claims 1 to 14, **characterized in that** the cover element (2) and/or the sealing element (3) is connected via a tensile element with a slide that is mounted to be displaced in a rail element arranged at the ground surface.

## Revendications

1. Plateforme flottante (1) avec un élément de pont plat (2) et un élément d'étanchéité (3) relié à l'élément de pont (2), qui, lors d'une exploitation, est en contact étanche avec une surface de liquide (4) et entoure, en commun avec l'élément de pont (2) et la surface du liquide (4) ou une surface de fond, un espace creux fermé (5) dans lequel une surpression portant l'élément de pont (2) peut être établie avec un dispositif de production d'air comprimé (5'), un élément d'étanchéité plat (3) étant prévu, l'élément d'étanchéité plat (3) pouvant être au moins une paroi périphérique (6) limitant l'espace creux (5), qui comprend, lors de l'exploitation, une portion d'étanchéité (3') dépassant dans le liquide, la paroi périphérique (6) étant une membrane flexible (7), **caractérisée en ce que** la portion d'étanchéité (3') de l'élément d'étanchéité (3) comprend une pluralité de zones, lestées par un élément de ballast (12), qui sont séparées par une zone libre de l'élément de ballast (12) de la portion d'étanchéité (3') de l'élément d'étanchéité (3).

2. Plateforme flottante selon la revendication 1, **caractérisée en ce que** la membrane (7) est de forme annulaire.

3. Plateforme flottante selon la revendication 1 ou 2, **caractérisée en ce que** l'élément d'étanchéité (3) se raccorde au bord d'une surface de pont (2') de l'élément de pont (2).

4. Plateforme flottante selon l'une des revendications 1 à 3, **caractérisée en ce que** l'élément d'étanchéité (3) est formé d'un seul bloc avec au moins le bord de la surface de pont (2') de l'élément de pont (2).

5. Plateforme flottante selon l'une des revendications 1 à 4, **caractérisée en ce que** l'espace creux fermé (5) est divisé, par au moins un autre élément d'étanchéité (3), en au moins deux espaces partiels (20) formant de préférence au moins un anneau externe et un anneau interne, l'espace creux fermé (5) étant divisé de préférence par une pluralité d'éléments d'étanchéité (3) disposés sensiblement en alvéoles ou en forme d'échiquier.

6. Plateforme flottante selon l'une des revendications 1 à 5, **caractérisée en ce que** la portion d'étanchéité (3') de l'élément d'étanchéité (3) est lesté avec au moins un élément de ballast (12) en métal ou béton.

7. Plateforme flottante selon la revendication 6, **caractérisée en ce que** la portion d'étanchéité (3') de l'élément d'étanchéité (3) est pliée ou ondulée dans la zone libre de l'élément de ballast (12).

8. Plateforme flottante selon la revendication 7, **caractérisée en ce que** l'élément de ballast (12) est une chambre (13), remplie d'un matériau de ballast, plus particulièrement du sable ou du béton, de la membrane (7), qui est formée de préférence à une zone d'extrémité libre de la portion d'étanchéité (3').

9. Plateforme flottante selon l'une des revendications 1 à 8, **caractérisée en ce que** la portion d'étanchéité (3') de l'élément d'étanchéité (3) comprend un élément de sustentation (14) constitué plus particulièrement d'une autre chambre (13) de la membrane flexible (7).

10. Plateforme flottante selon l'une des revendications 1 à 9, **caractérisée en ce que** l'élément de pont (2) ou l'élément d'étanchéité (3) sont reliés avec au moins un corps flottant ou de sustentation (15), immergé au moins partiellement dans le liquide lors de l'exploitation, le corps flottant ou de sustentation (15) étant de préférence une bouée (16) allongée, de préférence de forme tubulaire.

11. Plateforme flottante selon l'une des revendications 1 à 10, **caractérisée en ce que** l'élément de pont (2), l'élément d'étanchéité (3) ou le corps de sustentation (15) est relié avec au moins un corps de stabilisation (19), immergé au moins partiellement dans le liquide lors de l'exploitation, à la manière d'une ancre flottante.

12. Plateforme flottante selon l'une des revendications 10 ou 11, **caractérisée en ce qu'**une pluralité de corps flottants (15) ou de corps de stabilisation (19) sont fixés de manière annulaire sur l'élément d'étanchéité (3) ou disposés de manière globalement symétrique par rapport à un axe de symétrie vertical de l'élément de pont (2).

13. Plateforme flottante selon l'une des revendications 10 à 12, **caractérisée en ce qu'**au moins deux corps flottants (15) ou corps de stabilisation (19) sont reliés entre eux à l'aide d'éléments de liaison (18), plus particulièrement des tubes, des tiges, des câbles ou des ossatures.

14. Plateforme flottante selon l'une des revendications 1 à 13, **caractérisée en ce que** l'élément de pont (2) est réglable en hauteur plus particulièrement grâce à une force de poussée verticale réglable du corps flottant (15) ou une chambre (13') de la membrane (7) ou est logé de manière rotative autour d'un axe de rotation s'étendant dans le plan d'extension principale de l'élément de pont.

15. Plateforme flottante selon l'une des revendications 1 à 14, **caractérisée en ce que** l'élément de pont (2) ou l'élément d'étanchéité (3) est relié, par l'intermédiaire d'un élément pouvant être sollicité en traction, à un chariot qui est logé de manière coulissante sur un élément de rail disposé sur la surface du fond.
